(19) Europäisches Patentamt
European Patent Office
Office européen des brevets

(11) **EP 1 657 718 A1**

(12) **EUROPEAN PATENT APPLICATION**
published in accordance with Art. 158(3) EPC

(43) Date of publication:
**17.05.2006 Bulletin 2006/20**

(51) Int Cl.:
**G11B 7/24** (1968.09)   **G11B 7/26** (1968.09)
**G11B 7/00** (1968.09)   **B41M 5/26** (1968.09)

(21) Application number: **04771817.6**

(22) Date of filing: **12.08.2004**

(86) International application number:
**PCT/JP2004/011856**

(87) International publication number:
**WO 2005/017888 (24.02.2005 Gazette 2005/08)**

(84) Designated Contracting States:
**AT BE BG CH CY CZ DE DK EE ES FI FR GB GR HU IE IT LI LU MC NL PL PT RO SE SI SK TR**

(30) Priority: **19.08.2003 JP 2003295001**

(71) Applicant: **TDK Corporation**
**Chuo-ku,**
**Tokyo 103-8272 (JP)**

(72) Inventors:
• **KIKUKAWA, Takashi,**
**c/o TDK Corporation**
**Chuo-ku, Tokyo 103-8272 (JP)**

• **FUKUZAWA, Narutoshi,**
**c/o TDK Corporation**
**Chuo-ku, Tokyo 103-8272 (JP)**
• **KOBAYASHI, Tatsuhiro,**
**c/o TDK Corporation**
**Chuo-ku, Tokyo 103-8272 (JP)**

(74) Representative: **Grünecker, Kinkeldey,**
**Stockmair & Schwanhäusser**
**Anwaltssozietät**
**Maximilianstrasse 58**
**80538 München (DE)**

(54) **OPTICAL RECORDING MEDIUM, METHOD FOR PRODUCING THE SAME, AND DATA RECORDING METHOD AND DATA REPRODUCING METHOD FOR OPTICAL RECORDING MEDIUM**

(57)   An optical recording medium 10 is provided with a supporting substrate 11 and a light-transmitting layer 12, and further has between the light-transmitting layer 12 and the supporting substrate 11 a dielectric layer 31, a noble-metal oxide layer 23, a dielectric layer 32, a light absorption layer 22 and a dielectric layer 33. The second dielectric layer 32 contains as a main component ZnS or a mixture of ZnS and $SiO_2$, and therein the proportion of ZnS to the sum of ZnS and $SiO_2$ is set at a value from 60 mole % to 100 mole %. Since the material of the second dielectric layer 32 has both high hardness and elasticity, and high thermal conductivity besides, excellent balance of thermal conductivity with layer hardness can be achieved and makes it possible to form fine recording marks in true shapes.

## FIG. 1 (a)

# FIG. 1 (b)

**Description**

<Technical Field>

The present invention relates to an optical recording medium and a manufacturing method thereof, and more particularly, to an optical recording medium of the type which forms recording marks through the evolution of gas and a manufacturing method thereof. Moreover, the invention relates to a method of recording data on an optical recording medium and a method of reproducing data recorded on an optical recording medium, and more particularly, to a method of recording data on an optical recording medium of the type which forms recording marks through the evolution of gas and a method of reproducing data recorded on such an optical recording medium.

<Background Art>

Recent years have seen wide use of optical recording media, typified by CDs (Compact Discs) and DVDs (Digital Versatile Discs), as recording media for recording high-volume digital data.
Of the CDs, a compact disc of the type which can neither write data once more nor rewrite data (CD-ROM) has a structure that a reflective layer and a protective layer are stacked on a light-pervious substrate about 1.2 mm in thickness, and reproduction of data recorded on the compact disc can be performed by irradiating the reflective layer with a laser beam having a wavelength of about 780 nm from the light-pervious substrate side. On the other hand, a compact disc of the type which can write data once more (CD-R) and a compact disc of the type which can rewrite data (CD-RW) have a structure that a recording layer is further provided between a light-pervious substrate and a reflective layer, and the recording and reproduction of data can be performed by applying a laser beam having a wavelength of about 780 nm to the recording layer in the compact disc from the light-pervious substrate side.
For focusing a laser beam on CD, an objective lens with a numerical aperture of about 0.45 is used, and thereby the beam spot diameter of the laser beam on the reflective layer or the recording layer is narrowed down to about 1.6 μm. Thus the CD ensures a recording capacity of about 700 MB and a data transfer rate of about 1 Mbps at a standard linear velocity (about 1.2 m/sec).
Of the DVDs also, a digital versatile disc of the type which can neither write data once more nor rewrite data (DVD-ROM) has a structure that a laminate having a reflective layer and a protective layer on a light-pervious substrate about 0.6 mm in thickness and a dummy substrate about 0.6 mm in thickness are bonded together via an adhesive layer, and reproduction of data recorded thereon can be performed by the irradiation of the reflective layer with a laser beam having a wavelength of about 635 nm from the light-pervious substrate side. On the other hand, a digital versatile disc of the type which can write data once more (such as DVD-R) and a digital versatile disc of the type which can rewrite data (such as DVD-RW) have a structure that a recording layer is provided additionally between a light-pervious substrate and a reflective layer, and the recording and reproduction of data can be performed by applying a laser beam having a wavelength of about 635 nm to the recording layer in the digital versatile disc from the light-pervious substrate side.
For focusing a laser beam on DVD, an objective lens with a numerical aperture of about 0.6 is used, and thereby the beam spot diameter of the laser beam on the reflective layer or the recording layer is narrowed down to about 0.93 μm. In this way, recording and reproduction are made on DVDs by use of not only a laser beam with a shorter wavelength but also an objective lens having a greater numerical aperture than those on CDs, so that the beam spot diameter attained on DVDs is smaller than that on CDs. As a result, the DVDs ensure a recording capacity of about 4.7 GB per side and a data transfer rate of about 11 Mbps at a standard linear velocity (about 3.5 m/sec).
Very recently, optical recording media exceeding DVDs in data recording capacity and capable of ensuring data transfer rates in excess of those of the DVDs have been proposed. In order to ensure great capacities and high-rate data transfer for such next-generation optical recording media, both a laser beam with a wavelength of about 405 nm and an objective lens with a numerical aperture of about 0.85 are used. By this combined use, the beam spot diameter of the laser beam is narrowed down to about 0.43 μm, and a recording capacity of about 25 GB per side and a data transfer rate of about 36 Mbps at a standard linear velocity (about 4.9 m/sec) can be achieved.
As mentioned above, an objective lens very high in numerical aperture is used for next-generation optical recording media, so a very thin thickness setting of about 100 μm is given to their respective light-transmitting layers, which become the light path of a laser beam, for the purpose of ensuring a sufficient tilt margin as well as controlling the occurrence of coma. In the case of next-generation optical recording media, therefore, it is difficult to form various functional layers including a recording layer on a light-pervious substrate as in the case of current optical recording media, such as CDs and DVDs. Under these circumstances, a method of forming a reflective layer and a recording layer on a supporting substrate, further forming thereon a thin resin layer by use of a spin coating technique or the like and using the thin resin layer as light-transmitting layer is under study. In other words, the next-generation optical recording media are made in a way that layers are formed successively from the distant side of the incidence plane of light, in contrast to current optical recording media wherein layers are formed successively from the near side of the incidence plane of light.

As mentioned above, increases in capacity and data transfer rate of optical recording media are achieved mainly by reduction in the beam spot diameter of laser beam. Therefore, achievement of any further increases in the capacity and the data transfer rate requires an even larger reduction in the beam spot diameter. However, the use of a laser beam with any shorter wavelength causes a sharp increase in absorption of the laser beam by a light-transmitting layer and intensifies deterioration of the light-transmitting layer with time, so it is difficult to use a laser beam with any shorter wavelength. And it is also difficult to increase any further the numerical aperture of an objective lens in consideration of difficulty in lens design, provision for a tilt margin and so on. In other words, it can be said that any further reduction in beam spot diameter of laser beam is extremely difficult.

Such being the case, optical recording media of super-resolution type have been proposed recently as another approach to achievement of enhanced capacity and increased data transfer rate. The term "optical recording media of super-resolution type" refers to the optical recording media that enable formation of recording marks finer than the resolution limit and the reproduction of data from the recording marks formed, and the use of such optical recording media makes it possible to achieve increases in capacity and data transfer rate without reduction in beam spot diameter.

Explaining more specifically, the diffraction limit $d_1$ is given by the equation,

$$d_1 = \lambda/2NA$$

wherein $\lambda$ stands for the wavelength of a laser beam and NA stands for the numerical aperture of an objective lens. Accordingly, in the case of an optical recording medium in which each data is represented in the length of a mark of recording and the length of a blank area, namely the distance between edges, as in the cases of CD and DVD, the single frequency signal resolution limit $d_2$ is given by the equation,

$$d_2 = \lambda/4NA.$$

That is to say, when the length of the shortest mark of recording and the length of the shortest blank area are below the resolution limit in optical recording media of ordinary type, but not of super-resolution type, it becomes impossible to discriminate between the mark of recording and the blank area. In contrast thereto, optical recording media of super-resolution type can utilize marks of recording and blank areas whose lengths are below the resolution limit, so the attainment of increases in capacity and data transfer rate becomes possible without reduction in beam spot diameter.

As to the optical recording media of super-resolution type, there has hitherto been a proposal on optical recording media of super resolution type referred to as "Scattering-type Super RENS" (Super Resolution Near-field Structure) (See Non-patent Document 1). In such a type of optical recording medium, a phase-changing material layer and a reproduction layer made from metal oxide are used. And it is thought that the metal oxide constituting the reproduction layer is decomposed in the high-energy area situated at a beam spot center when irradiated with a laser beam and the laser beam is scattered by the thus produced metal particulates and generates near-field light. As a result, the phase-changing material layer is irradiated locally with the near-field light. So the explanation is offered that the utilization of such a phase change makes it possible to perform super-resolution recording and super-resolution reproduction. And it is supposed that, when the laser beam moves away, the metal produced by decomposition in the reproduction layer is combined with oxygen again to return to the original metal oxide, so that repeated rewriting becomes possible.

According to the studies made by the present inventors, however, it became evident that, in the optical recording media of super resolution type referred to as "Scattering-type Super RENS", it hardly occurred that phase changes in the phase-changing material layers manifested themselves in the form of signals, and besides, the decompositions in the reproduction layers were irreversible. In other words, our studies revealed that the optical recording media of super resolution type referred to as "Scattering-type Super RENS" were not optical recording media of rewritable type which can form reversible recording marks in the phase-changing material layers, but it was possible to materialize them as optical recording media of write-once type which can form irreversible recording marks in the reproduction layers (noble-metal oxide layers) (See Non-patent Document 2).

Herein, a reason for the possibility of recording marks finer than the resolution limit being formed in a noble-metal oxide layer is in that the noble-metal oxide layer is decomposed locally in high-energy areas situated at beam spot centers and thereby gas bubbles are evolved to cause plastic deformation in the areas concerned. The portions having undergone plastic deformation are used as marks of recording, while the portions not having undergone any plastic deformation are used as blank areas. However, no reason for the possibility of data being played back from the thus formed fine marks of recording is clarified yet.

[Non-patent Document 1] "A near-field recording and readout technology using a metallic probe in an optical disk", Jpn. J. Appl. Phys., compiled by The Japan Society of Applied Physics, 2000, Volume 39, pages 980-981

[Non-patent Document 2] "Rigid bubble pit formation and huge signal enhancement in super-resolution near-field structure disk with platinum-oxide layer", Applied Physics Letters, American Institute of Physics, December 16, 2002, Volume 81, Number 25, pp. 4697-4699

However, it has turned out that the phase-changing material layer hitherto regarded as "recording layer" doesn't really function as a recording layer, so that there is a lot of uncertainty about what contributions the phase-changing material layer has to the formation of recording marks, what changes are caused in signal characteristics by materials used, and so on. Further, since it has been found that the gas bubbles evolved by decomposition in the noble-metal oxide layer makes marks of recording, it is thought that there is a need to select materials for all layers present around the noble-metal oxide layer in consideration of deformations by evolution of gas bubbles, and so on.

<Disclosure of the Invention>

Therefore, an object of the invention is to provide an optical recording medium that enables super-resolution recording and super-resolution reproduction when a laser beam with a shorter wavelength and an objective lens with a greater numerical aperture are used, and besides, that has undergone optimization of materials used in all layers present around a noble-metal oxide layer, and further to provide a manufacturing method thereof.

Another object of the invention is to provide a method of recording data on a super-resolution optical recording medium, wherein materials for all layers present around a noble-metal oxide layer are optimized, by use of a laser beam with a shorter wavelength and an objective lens with a greater numerical aperture, and to provide a method of reproducing data recorded on the aforesaid recording medium.

An optical recording medium according to the invention is characterized by having a substrate, a noble-metal oxide layer, a first dielectric layer provided on a light-incidence plane side when viewed from the noble-metal oxide layer, a second dielectric layer provided on the side opposite to the light-incidence plane when viewed from the noble-metal oxide player, and further by the second dielectric layer containing ZnS or a mixture of ZnS and $SiO_2$ as a main component wherein the proportion of ZnS to the sum of ZnS and $SiO_2$ is set at a value from 60 mole % to 100 mole %.

The foregoing material for the second dielectric layer has both high hardness and elasticity, and high thermal conductivity besides. Therefore, the second dielectric layer arranged to be adjacent to the noble-metal oxide layer on the side opposite to the light-incidence plane offers a good balance of thermal conductivity and layer hardness; as a result, it becomes possible to form fine recording marks in true shape. In order to attain a better balance between the thermal conductivity and the layer hardness, it is preferable that the proportion of ZnS to the sum of ZnS and $SiO_2$ is set at a value from 70 to 90 mole %, particularly of the order of 80 mole %. Such settings of the ZnS proportion make it possible to ensure recording marks of good shapes even when the recording marks are finer in size.

Further, it is preferable that, on the side opposite to the light-incidence plane when viewed from the second dielectric layer, a light absorption layer and a third dielectric layer are provided additionally in this arranging order when viewed from the second dielectric layer side. When the present optical recording medium has such a structure, the energy of a laser beam applied thereto at the recording time can be converted into heat with high efficiency, so that excellent recording characteristics can be obtained.

Furthermore, it is preferable that a reflective layer is provided additionally on the side opposite to the light-incidence plane when viewed from the third dielectric layer. The provision of such a reflective layer can not only heighten the level of reproduction signals but also substantially improve reproduction stability. The term "reproduction stability" as used herein refers to the resistance to a deterioration phenomenon caused by reproduction, namely a phenomenon that the noble-metal oxide layer changes its state by energy of a laser beam applied thereto at the time of reproduction and thereby a noise increase and a carrier decrease is caused to result in CNR reduction. The thickness of the reflective layer is preferably from 5 nm to 200 nm, far preferably from 10 nm to 150 nm. By adjusting the reflective layer thickness to such a range, it becomes possible to achieve a sufficient reproduction stability enhancement effect without a big drop in productivity.

In addition, it is preferable that platinum oxide ($PtO_x$) is contained in the noble-metal oxide layer. In this case, it is most favorable that platinum oxide ($PtO_x$) constitutes substantially whole the noble-metal oxide layer, but there's nothing wrong with containing therein other components and inevitably mixed impurities. The use of platinum oxide ($PtO_x$) as a component in the noble-metal oxide layer makes it possible to obtain excellent signal characteristics and sufficient durability.

When a light absorption layer is further provided on the side opposite to the light-incidence plane when viewed from the second dielectric layer, it is preferable that the light absorption layer contains as a main component a material which can be represented by

$$(Sb_aTe_{1-a})_{1-b}MA_b$$

(wherein MA is an element other than antimony (Sb) and tellurium (Te), 0<a<1 and 0≤b<1), and besides, which is different from an intermetallic compound represented by

$$\{(GeTe)_c(Sb_2Te_3)_{1-c}\}_dMB_{1-d}$$

(wherein MB is an element other than antimony (Sb), tellurium (Te) and germanium (Ge), c=1/3, 1/2 or 2/3, and O<d≤1). When the foregoing material is selected as the main component of a light absorption layer, localized deformations of the noble-metal oxide layer at the time of recording is not inhibited by such a light absorption layer. By this advantage being coupled with properties of the second dielectric layer, attainment of excellent signal characteristics can be made possible even when fine recording marks are formed.

Moreover, it is preferable that a light-transmitting layer having a light-incidence plane is further provided on the side opposite to the substrate when viewed from the first dielectric layer side, the thickness of the substrate is from 0.6 mm to 2.0 mm and the thickness of the light-transmitting layer is from 10 $\mu$m to 200 $\mu$m. According to such an embodiment, super-resolution recording and super-resolution reproduction can be performed by using a laser beam with a wavelength ($\lambda$) shorter than about 635 nm and an objective lens with a numerical aperture (NA) greater than about 0.6 and setting $\lambda$/NA at 640 nm or below, and it becomes possible to achieve excellent characteristics, notably in super-resolution recording and super-resolution reproduction using a laser beam with a wavelength of about 405 nm and an objective lens with a numerical aperture of about 0.85 which are used for next-generation optical recording media.

A method of manufacturing an optical recording medium according to the invention is characterized in that the method includes a first process of forming on a substrate a reflective layer, a third dielectric layer, a light absorption layer, a second dielectric layer, a noble-metal oxide layer and a first dielectric layer in the order of mention, and a second process of forming a light-transmitting layer on the first dielectric layer, and the second dielectric layer contains as a main component ZnS or a mixture of ZnS and SiO$_2$ wherein the proportion of ZnS to the sum of ZnS and SiO$_2$ is set at a value from 60 mole % to 100 mole %.

In accordance with the invention, it becomes possible to manufacture optical recording media which enable super-resolution recording and super-resolution reproduction to be performed at a $\lambda$/NA setting of 640 nm or below by use of a laser beam with a wavelength ($\lambda$) shorter than about 635 nm and an objective lens with a numerical aperture greater than about 0.6. Moreover, since the main component in the second dielectric layer has the foregoing composition, it becomes possible to obtain excellent signal characteristics even when minute recording marks are formed. It is preferable to carry out the first process in accordance with a vapor deposition method and the second process in accordance with a spin coating method.

The method of recording data in accordance with the invention is a data recording method in which data is recorded by irradiation the foregoing optical recording medium with a laser beam from the light absorption layer side, and is characterized in that, when the wavelength of the foregoing laser beam is represented as $\lambda$ and the numerical aperture of the objective lens for focusing the laser beam is represented as NA, the $\lambda$/NA value is set at 640 nm or below and a recording mark string including recording marks $\lambda$/4NA or below in length is recorded. On the other hand, the method of reproducing data according to the invention is a data reproducing method in which data is played back by a laser beam being applied to the foregoing optical recording medium from the light-transmitting layer side, and is characterized in that, when the wavelength of the foregoing laser beam is represented as $\lambda$ and the numerical aperture of the objective lens for focusing the laser beam is represented as NA, the $\lambda$/NA value is set at 640 nm or below and the data is played back from a string of recorded marks including the recorded marks $\lambda$/4NA or below in length. In both cases, it is most favorable that the wavelength of the laser beam used is set at about 405 nm and the numerical aperture of the objective lens used is set at about 0.85. By doing so, the same recording-and-reproducing apparatus as used for next-generation optical recording media can be utilized, so the costs for development and production of recording-and-reproducing apparatus can be reduced.

According to the invention, the second dielectric layer adjacent to the noble-metal oxide layer functioning as the recording layer has a good balance between thermal conductivity and layer hardness, so it becomes possible to form fine recording marks in their true shapes. Thus it becomes possible to obtain excellent characteristics even when recording is carried out by formation of fine recording marks below the resolution limit. Instead of the noble-metal oxide layer functioning as the recording layer, a noble-metal nitride layer may be used. The optical recording medium according to the invention in particular makes it possible to perform super-resolution recording and super-resolution reproduction at a $\lambda$/NA setting of 640 nm or below by use of a laser beam with a wavelength shorter than about 635 nm and an objective lens with a numerical aperture greater than about 0.6, and to ensure excellent characteristics in super-resolution recording and super-resolution reproduction, especially by use of a laser beam with a wavelength shorter than about 405 nm and an objective lens with a numerical aperture greater than about 0.85, as they are used for next-generation optical recording media. Accordingly, the same recording-and-reproducing apparatus as used for next-generation optical recording media can be utilized, so the costs for development and production of recording-and-reproducing apparatus can be reduced.

<Brief Description of the Drawings>

Fig. 1(a) is a notch-cut oblique view showing the outward appearance of an optical recording medium 10 according to a preferred embodiment of the invention, and Fig. 1(b) is a partial cross-sectional view of the magnified A region shown in Fig. 1(a).
Fig. 2 is a diagram showing schematically a situation in which the optical recording medium 10 is irradiated with a laser beam 40.
Fig. 3(a) is a plan view showing a beam spot of the laser beam 40 on a noble-metal oxide layer 23, and Fig. 3(b) is a curve showing a intensity distribution in the beam spot.
Fig. 4 is an illustration demonstrating the size of bubble pit 23 a (a mark of recording).
Fig. 5 is a drawing of the waveform showing an example of an intensity-modulation pattern of the laser beam 40 under recording.
Fig. 6 is a drawing of the waveform showing another example of an intensity-modulation pattern of the laser beam 40 under recording.
Fig. 7 is a graph showing schematically a relationship between a recording power of the laser beam 40 and a CNR of the reproduction signal produced by the subsequent reproduction.
Fig. 8 is a graph showing schematically a relationship between a reproducing power of the laser beam 40 and a CNR of the reproduction signal produced by the subsequent reproduction.
Fig. 9 is a graph showing measurement results on Characteristic Evaluation 1.
Fig. 10 is a graph showing measurement results on Characteristic Evaluation 2.
Fig. 11 is a graph showing measurement results on Characteristic Evaluation 3.
Fig. 12 is a graph showing measurement results on Characteristic Evaluation 4.
Fig. 13 is a graph showing measurement results on Characteristic Evaluation 5.
Fig. 14 is a graph showing measurement results on Characteristic Evaluation 6.
Fig. 15 is a graph showing measurement results on Characteristic Evaluation 7.

<Best Modes for Carrying Out the Invention>

Suitable modes for carrying out the invention are illustrated below in detail by reference to the drawings attached.

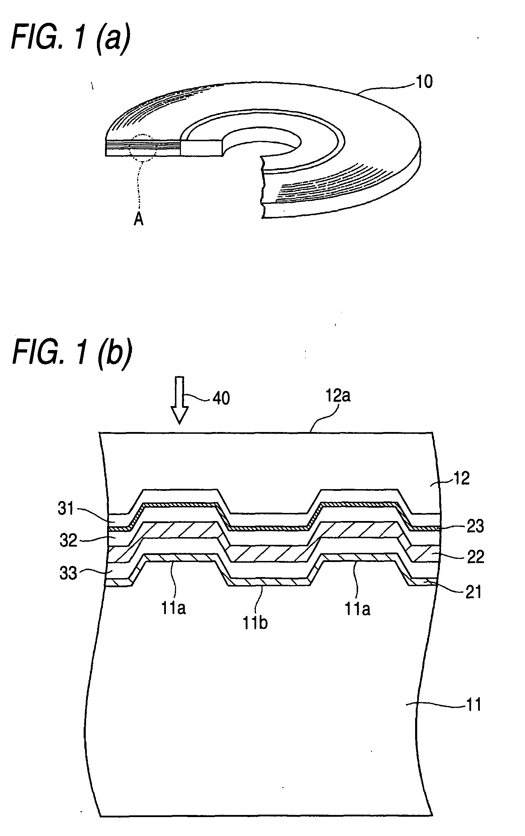

Fig. 1(a) is a notch-cut oblique view showing the outward appearance of an optical recording medium 10 according to a preferred embodiment of the invention, and Fig. 1(b) is a partial cross-sectional view of the magnified A region shown in Fig. 1(a).
An optical recording medium 10 according to an embodiment of the invention has, as shown in Fig. 1(a), the shape of a disk, and it is structured, as shown in Fig. 1(b), to include a supporting substrate 11, a light-transmitting layer 12 and, between the supporting substrate 11 and the light-transmitting layer 12, a reflective layer 21, light absorption layer 22 and a noble-metal oxide layer 23 in this arranging order, and further dielectric layers 33, 32 and 31 provided between the reflective layer 21 and the light absorption layer 22, between the light absorption layer 22 and the noble-metal oxide layer 23 and between the noble-metal oxide layer 23 and the light-transmitting layer 12, respectively. The recording and reproduction of data can be performed by irradiating the optical recording medium 10 with the laser beam 40 from the light-incidence plane 12a side while rotating the medium 10. The wavelength setting of a laser beam 40 can be made at a value below 635 nm, and it is most favorable to set the wavelength of the laser beam 40 at the order of 405 nm as used for next-generation optical recording media in particular. And the numerical aperture setting of an objective lens for focusing the laser beam 40 can be made at a value greater than 0.6, particularly a value of the order of 0.85 as used for next-generation optical recording media. In some cases, the supporting substrate 11 is referred to simply as "substrate" in the present specification and claims.
The supporting substrate 11 is a disk-shaped substrate used for ensuring mechanical strength required of the optical recording medium 10 and, on one side thereof, a groove 11a and a land 11b for guiding the laser beam 40 are formed in a spiral pattern so as to trend toward the peripheral part from the proximity to the central part or toward the proximity to central part from the peripheral part. The supporting substrate 11 has no particular restrictions as to material and thickness so far as they can ensure mechanical strength. For instance, the material used for the supporting substrate 11 may be glass, ceramics, resin or so on. In view of easiness of molding, however, resin is preferred over the others. Examples of such resin include polycarbonate resin, olefin resin, acrylic resin, epoxy resin, polystyrene resin, polyethylene resin, polypropylene resin, silicone resin, fluorocarbon resin, ABS resin and urethane resin. Of these resins, polycarbonate resin and olefin resin in particular are preferred in point of workability. Incidentally, since the supporting substrate 11 is not in the optical path of the laser beam 40, there is no necessity to choose a material highly pervious to light in the wavelength range concerned.

On the other hand, the thickness of the supporting substrate 11 is preferably set at a value necessary and sufficient for ensuring the mechanical strength, specifically ranging from 0.6 mm to 2.0 mm. In consideration of compatibility with the current optical recording media and the next-generation optical recording media, it is favorable that the thickness is set at a value ranging from 1.0 mm to 1.2 mm, particularly the order of 1.1 mm. The diameter of the supporting substrate 11 has also no particular limitations, but it is advantageous to set the diameter at the order of 120 mm in consideration of the compatibility with the current optical recording media and the next-generation optical recording media.

The light-transmitting layer 12 is a layer lying in the optical path of the laser beam 40 applied during recording and reproduction. The material thereof has no particular restrictions so long as it has sufficiently high transmittance in the wavelength region of the laser beam 40 used, but resins pervious to light, for example, can be used. In the optical recording medium 10 according to this embodiment of the invention, the thickness of the light-transmitting layer 12 is set at a value ranging from 10 $\mu$m to 200 $\mu$m. This is because, when the thickness of the light-transmitting layer 12 is below 10 $\mu$m, the beam diameter on the light-incidence plane 12a becomes extremely small, so that blemish and dust on the light-incidence plane 12a have too great influence upon the recording and reproduction; while, when the thickness is increased beyond 200 $\mu$m, it becomes difficult to ensure tilt margin and to control coma. When the compatibility with the next-generation optical recording media is considered, the thickness is preferably set at a value ranging from 50 $\mu$m to 150 $\mu$m, particularly a value ranging from 70 $\mu$m to 120 $\mu$m.

The reflective layer 21 is a layer performing functions in both increasing the intensity of reproduction signals and improving reproduction stability. Examples of a material usable for the reflective layer 21 include single metals, such as gold (Au), silver (Ag), copper (Cu), platinum (Pt), aluminum (A1), titanium (Ti), chromium (Cr), iron (Fe), cobalt (Co), nickel (Ni), magnesium (Mg), zinc (Zn) and germanium (Ge), and alloys made from two or more of these metals. The thickness of the reflective layer 21, though not particularly limited, is set preferably at a value ranging from 5 nm to 200 nm, far preferably at a value ranging from 10 nm to 100 nm, particularly preferably at a value ranging from 10 nm to 50 nm. This is because, when the thickness of the reflective layer 21 is below 5 nm, the effect of enhancing reproduction stability cannot be fully achieved; while, when the thickness of the reflective layer 21 is increased beyond 200 nm, too much time is required for forming the layer and the productivity is lowered, and besides, further increase in reproduction stability enhancement effect is hardly obtainable. Compared with such a thickness range, the thickness setting of the reflective layer 21 at a value ranging from 10 nm to 100 nm, particularly from 10 nm to 50 nm, makes it possible to obtain sufficient reproduction stability enhancement effect without a sharp drop in productivity. Incidentally, it is not essential to provide the reflective layer 21 in the present optical recording medium, but it becomes possible to achieve the foregoing effects by providing this layer.

The light absorption layer 22 is a layer hitherto thought to function as "recording layer". In actual fact, the layer 22 acts mainly as a layer that absorbs energy of the laser beam 40 and converts it into heat. As a material for the light absorption layer 22, it is preferable to use a material not only exhibiting good absorption in the wavelength region of a laser beam 40 used but also having such hardness to allow deformation of the noble-metal oxide layer 23 under recording. Examples of a material capable of meeting such requirements in the case of using a laser beam 40 with a wavelength shorter than 635 nm include phase-changing materials used as the recording layer material in rewritable optical recording media. With respect to such a phase-changing material, it is preferable to use as its main component an alloy of antimony (Sb) and tellurium (Te) or a material prepared by adding additives to this alloy, or an alloy of antimony (Sb), tellurium (Te) and germanium (Ge) or a material prepared by adding additives to this alloy. The expression "as main component" as used herein implies that it is permissible to contain a small amount (15 mole % or less) of other materials and inevitably mixed impurities. Examples of such materials include materials represented by

$$(Sb_aTe_{1-a})_{1-b}MA_b$$

(wherein MA is an element other than antimony (Sb) and tellurium (Te), $0<a<1$ and $0\leq b<1$) and phase-changing materials of intermetallic compound type represented by

$$\{(GeTe)_c(Sb_2Te_3)_{1-c}\}_dMB_{1-d}$$

(wherein MB is an element other than antimony (Sb), tellurium (Te) and germanium (Ge), c is 1/3, 1/2 or 2/3, and $0<d\leq1$). Herein, the phase-changing materials of intermetallic compound type represented by c= 1/3, 1/2 and 2/3 can be expressed as $Ge_1Sb_4Te_7$, $Ge_1Sb_2Te_4$ and $Ge_2Sb_2Te_5$, respectively, when the atomic ratio is presented in the form of a simplest integral ratio.

In those cases, it is preferable that the subscript settings are $0\leq a\leq1$ and $0\leq b\leq0.15$, or $1/3\leq c\leq2/3$ and $0.9\leq d$.

The b value greater than 0.15 is particularly undesirable, because there is a fear that the light absorption layer 22 may have a light absorption coefficient lower than required, and besides, there is a fear that the thermal conductivity may fall short of the value required for the light absorption layer 22.

The element MA, though not particularly restricted as to its species, is preferably one or more than one element selected from the group consisting of germanium (Ge), indium (In), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O) and rare-earth elements (including scandium (Sc), yttrium (Y) and lanthanides). In the case of using laser beams with wavelengths from 390 nm to 420 nm in particular, it is preferable to select as the element MA one or more than one element from the group consisting of silver (Ag), germanium (Ge), indium (In) and rare-earth elements. By this selection, it becomes possible to achieve excellent signal characteristics in the cases of using laser beams with wavelengths from 390 nm to 420 nm, notably in the case of using a laser beam of the order of 405 nm.

The element MB also is not particularly restricted as to its species, but it is preferably one or more than one element selected from the group consisting of indium (In), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O) and rare-earth elements (including scandium (Sc), yttrium (Y) and lanthanides). In the case of using laser beams with wavelengths from 390 nm to 420 nm in particular, it is preferable to select as the element MB one or more than one element from the group consisting of silver (Ag), indium (In) and rare-earth elements. By this selection, it becomes possible to achieve excellent signal characteristics in the cases of using laser beams with wavelengths from 390 nm to 420 nm, notably in the case of using a laser beam of the order of 405 nm.

Of the foregoing phase-changing materials, it is preferable that phase-changing materials represented by

$$(Sb_aTe_{1-a})_{1-b}MA_b$$

and satisfying

$$0<a<1,$$

particularly

$$0<a<1$$

and

$$0\leq b\leq0.15,$$

are selected as the main component in the light absorption layer 22. This is because, in contrast to phase-changing materials of intermetallic compound type represented by

$$\{(GeTe)_c(Sb_2Te_3)_{1-c}\}dMB_{1-d,}$$

the materials satisfying the foregoing conditions have high ductility. Accordingly, the use of the aforementioned phase-changing materials as a main component in the light absorption layer 22 causes no inhibition of localized deformation in the noble-metal oxide layer 23, so that even when minute recording marks are formed it becomes possible to acquire satisfactory signal characteristics.

However, it hardly occurs that the phase changes caused in the light absorption layer 22 by recording manifest themselves in the form of signals. This is a reason why it is not essential to use a phase-changing material as the material for the light absorption layer 22. Up to the present, however, it has been confirmed by the Inventors that the best signal characteristics can be obtained by using phase-changing materials, especially the phase-changing materials having the foregoing compositions, as the material for the light absorption layer 22.

The thickness of the light absorption layer 22 is preferably set at a value ranging from 5 nm to 100 nm, far preferably set at a value ranging from 10 nm to 80 nm, and particularly preferably set at a value ranging from 10 nm to 60 nm. This is because, when the light absorption layer 22 has a thickness thinner than 5 nm, there is a fear that it cannot absorb properly the laser beam energy; while, when the thickness is increased beyond 100 nm, much time is consumed in forming the layer to result in a lowering of productivity. Compared with these situations, the thickness setting of the light absorption layer 22 in the range of 10 nm to 80 nm, especially 10 nm to 60 nm, makes it possible to fully absorb the energy of the laser beam 40 while ensuring high productivity.

The noble-metal oxide layer 23 is a layer in which recording marks are formed by irradiation with the laser beam 40, and contains a noble-metal oxide as a main component. The noble-metal has no particular restriction as to its species, but it preferably includes at least one species chosen from platinum (Pt), silver (Ag) or palladium (Pd). Of these noble-metals, platinum (Pt) in particular is preferred. In other words, the selection of platinum oxide ($PtO_x$) as the material for the noble-metal oxide layer 23 is particularly preferred. When platinum oxide ($PtO_x$) is used as the material for the noble-metal oxide layer, it becomes possible to acquire excellent signal characteristics and sufficient durability. In the case of using platinum oxide ($PtO_x$) as the material for the noble-metal oxide layer 23, it is appropriate that the value x be adjusted to make an extinction coefficient (k) below 3 (k<3) in the wavelength region of the laser beam 40 used.

The thickness of the noble-metal oxide layer 23 has a great influence upon signal characteristics. In order to achieve excellent signal characteristics, it is appropriate that the thickness be set at a value ranging from 2 nm to 50 nm, preferably at a value ranging from 3 nm to 30 nm. In order to especially excellent signal characteristics, the thickness setting from 2 nm to 8 nm is preferred, the setting from 3 nm to 6 nm is far preferred, and the setting of the order of 4 nm is extremely preferred. This is because, when the thickness of the noble-metal oxide layer 23 is thinner than 2 nm or thicker than 50 nm, there is a fear that recording marks cannot be formed in a good shape upon irradiation with a laser beam 40 and the carrier/noise ratio (CNR) attained is not sufficient. Compared with such thickness settings, the case where the thickness of the noble-metal oxide layer 23 is set at a value ranging from 3 nm to 30 nm, especially at the order of 4 nm, enables formation of recording marks in a good shape and achievement of high CNR.

The dielectric layers 31, 32 and 33 play roles mainly in the physical and chemical protections of their respective adjacent layers and the adjustments of optical characteristics. In the present specification and claims, the dielectric layers 31, 32 and 33 are sometimes referred to as first, second and third dielectric layers, respectively.

In the invention, the material for the dielectric layer 32 include ZnS or a mixture of ZnS and $SiO_2$ as a main component, and the proportion of ZnS to the sum of ZnS and $SiO_2$ is set at a value ranging from 60 mole % to 100 mole %. Herein, it is most appropriate that substantially all the dielectric layer 32 be constituted of ZnS or a mixture of ZnS and $SiO_2$, but a small amount (15 mole % or less) of other materials and inevitable impurities may be mixed in the dielectric layer 32.

The use of the foregoing material as the material for the dielectric layer 32 is a result of consideration given mainly to a balance between thermal conductivity and hardness of the layer. More specifically, in the optical recording medium 10 according to this embodiment of the invention, as described below in detail, the noble-metal oxide layer 23 is locally heated by irradiation with a laser beam 40, and the spots thus heated are decomposed and evolve bubbles. And these bubbles are utilized as marks of recording, so the dielectric layer 32 is required to have high ductility as a first property thereof so as not to inhibit the deformation of the noble-metal oxide layer by evolution of the bubbles. This is because too high hardness of the dielectric layer 22 inhibits the deformation of the noble-metal oxide layer, and it becomes very difficult to form minute marks of recording. In order to impart such a property to the dielectric layer 32, it is sufficient to use ZnS as the material thereof.

On the other hand, a second property required for the dielectric layer 32 is fairly high thermal conductivity in order to permit localized heating and decomposition of the noble-metal oxide layer 23. This is because, when the thermal conductivity of the dielectric layer 32 is too low, the area heated by irradiation with a laser beam 40 is unduly widened; as a result, expansion of the recording marks formed occurs and makes it difficult for minute marks of recording to have good shapes. Even when the material used for the dielectric layer 32 is ZnS alone in a substantial sense, the thermal conductivity enough to form fairly small recording marks can be obtained, but addition of $SiO_2$ to ZnS enables a further increase in the thermal conductivity.

However, the hardness of the layer formed becomes higher with an increase in proportion of $SiO_2$ to the sum of ZnS and $SiO_2$, so it becomes impossible to satisfy the property required firstly for the dielectric layer 32.

In the invention, as a result of consideration given to those aspects, ZnS or a mixture of ZnS and $SiO_2$ is used as the main component in the dielectric layer 32 and the proportion of ZnS to the sum of ZnS and SiO2 is set at a value ranging from 60 mole % to 100 mole %, and thereby the balance between thermal conductivity and hardness of the layer is kept properly and the marks of recording are formed in good shapes even when they are minute ones. In addition, ZnS or a mixture of ZnS and $SiO_2$ provides an advantage that it can enhance the productivity since the layer formation speed thereof is high when the sputtering method is adopted.

In order to achieve a better balance between thermal conductivity and hardness of the layer, it is appropriate to set the proportion of ZnS to the sum of ZnS and SiO2 at a value ranging from 70 mole % to 90 mole %, particularly of the order of 80 mole %. The ZnS proportion setting in such a range allows even finer marks of recording to have good shapes.

On the other hand, materials used as main components in the dielectric layers 31 and 33 have no particular restrictions, but they can be oxides, sulfides, nitrides or combinations of these compounds. Examples of a material suitable for such main components include the oxides, nitrides, sulfides and carbides of aluminum (Al), silicon (Si), cerium (Ce), titanium (Ti), zinc (Zn) and tantalum (Ta), such as $Al_2O_3$, AlN, ZnO, ZnS, GeN, GeCrN, $CeO_2$ SiO, $SiO_2$, $Si_3N_4$, SiC, $La_2O_3$, TaO, $TiO_2$, SiAlON (a mixture of $SiO_2$, $Al_2O_3$, $Si_3N_4$ and AlN), and LaSiON (a mixture of $La_2O_3$, $SiO_2$ and $Si_3N_4$), and mixtures of two or more of the above-recited compounds. Of these compounds, a mixture of ZnS with $SiO_2$ is more suitable for the dielectric layers 31 and 33 also. In this case, it is favorable that the proportion of ZnS is adjusted to a value ranging from 70 mole % to 90 mole % and the proportion of $SiO_2$ is adjusted to a value ranging from 10 mole % to 30 mole %. And it is most favorable that the ratio between ZnS and $SiO_2$ is adjusted to the order of 80:20 by mole.

The materials constituting the dielectric layers 31, 32 and 33 may be identical with one another, or may be partially or entirely different from one another. Further, at least one among the dielectric layers 31, 32 and 33 may have a multilayer structure made up of two or more layers.

The thickness of the dielectric layer 33 is preferably set at a value ranging from 10 nm to 140 nm, and far preferably set at a value ranging from 20 nm to 120 nm. This is because there is a fear that the dielectric layer 33 below 10 nm in thickness cannot fully protect the light absorption layer 22; while, when the thickness of the dielectric layer 33 is increased beyond 140 nm, it takes so long to form the layer and the productivity is lowered. Compared with such thickness settings, the dielectric layer 33 thickness settings from 20 nm to 120 nm make it possible to effectively protect the light absorption layer 22 while ensuring high productivity.

The thickness of the dielectric layer 32 is preferably set at a value ranging from 5 nm to 100 nm, and far preferably set at a value ranging from 20 nm to 100 nm. This is because there is a fear that the dielectric layer 32 below 5 nm in thickness is destroyed upon decomposition of the noble-metal oxide layer 23 and fails to protect the noble-metal oxide layer 23, while the dielectric layer 32 beyond 100 nm in thickness interferes with proper deformation of the noble-metal oxide layer 23 at the time of recording. Compared with such thickness settings, the dielectric layer 23 thickness settings from 20 nm to 100 nm don't cause excessive hindrance to the deformation under recording while ensuring proper protection of the noble-metal oxide layer 23. In addition, the thickness of the dielectric layer 32 influences the signal characteristics at the time of reproduction of data, and the achievement of high CNR becomes possible by setting the thickness at a value ranging from 50 nm to 70 nm, particularly a value of the order of 60 nm.

The thickness of the dielectric layer 31 may be determined depending on the required reflectivity as far as it permits full protection of the noble-metal oxide layer 23, and it is preferably set at, e.g., a value ranging from 30 nm to 120 nm, far preferably set at a value ranging from 50 nm to 100 nm, and particularly preferably set at a value of the order of 70 nm. This is because there is a fear that the dielectric layer 31 below 30 nm in thickness cannot fully protect the noble-metal oxide layer 23, while the dielectric layer 31 beyond 120 nm in thickness requires a long time for formation thereof and causes a drop in productivity. Compared with these thickness settings, the dielectric layer 31 thickness settings from 50 nm to 100 nm, especially of the order of 70 nm, permit full protection of the noble-metal oxide layer 23 while ensuring high productivity.

The foregoing is a structure of the optical recording medium 10.

In manufacturing the optical recording medium 10 having such a structure, preparation for the supporting substrate 11 is made first, and then on the groove 11 a- and land 11b-formed side of the substrate surface are formed successively the reflective layer 21, the dielectric layer 33, the light absorption layer 22, the dielectric layer 32, the noble-metal oxide layer 23, the dielectric layer 31 and the light-transmitting layer 12 in the order of mention. In this manner, the optical recording medium 10 can be manufactured. In other words, sequential formation of layers is carried out from the side opposite to the light-incidence plane 12a as in the case of next-generation optical recording media.

For forming the reflective layer 21, the dielectric layer 33, the light absorption layer 22, the dielectric layer 32, the noble-metal oxide layer 23 and the dielectric layer 31, vapor deposition methods including a sputtering method and a vacuum evaporation method, wherein chemical species containing their respective constituent elements are used, can be adopted. Of these methods, the adoption of a sputtering method is advantageous over the others. On the other hand, the formation of the light-transmitting layer 12 can be performed, e.g., by viscosity-adjusted UV-curable resin of acrylic or epoxy type being made into a coating film according to a spin coating method and then the coating film being cured by irradiation with UV rays in the atmosphere of nitrogen. Instead of using the spin coating method, the light-transmitting layer may be formed using a light-pervious sheet containing a light-pervious resin as a major component and an adhesive of every kind or a pressure-sensitive adhesive.

Additionally, a hard coat layer may be provided on the surface of the light-transmitting layer 12 to protect the surface of the light-transmitting layer 12. In this case, the hard coat layer surface forms the light-incidence plane 12a. Examples of a material usable for the hard coat layer include a UV-curable resin containing an epoxy acrylate oligomer (a difunctional oligomer), a multifunctional acrylic monomer, a monofunctional acrylic monomer and a photopolymerization initiator, the oxides, nitrides, sulfides and carbides of aluminum (A1), silicon (Si), cerium (Ce), titanium (Ti), zinc (Zn) and tantalum (Ta), and mixtures of two or more of these compounds. In the case of using the UV-curable resin as the material for the hard coat layer, it is preferable that the layer is formed on the light-transmitting layer 12 by use of a spin coating method. When the foregoing oxide, nitride, sulfide, carbide or a mixture of two or more of these compounds is used, on the other hand, vapor deposition methods using chemical species containing those constituent elements, such as a sputtering method and a vacuum evaporation method, can be adopted. Of these methods, the sputtering method is used to particular advantage.

Moreover, it is preferable to prevent soil adhesion to the hard coat layer and enhance a soil-releasing function by add lubricity to the hard coat layer. In order to impart the lubricity to the hard coat layer, it is effective to add a lubricant to a mother material of the hard coat layer. The lubricant is preferably chosen from silicone lubricants, fluorocarbon lubricants, or fatty acid ester lubricants, and the content thereof is preferably from 0.1 mass % to 5.0 mass %.

In the next place, the method and principle of recording data on the optical recording medium 10 according to an embodiment of the invention are illustrated below.

Data is recorded on the optical recording medium 10 by irradiating the noble-metal oxide layer 23 with the laser beam 40 of a wavelength shorter than 63 nm, notably a wavelength of the order of 405 nm as used for next-generation optical recording media, from the light-incidence plane 12a side while rotating the optical recording medium 10. In this case, the objective lens usable for focusing the laser beam 40 is an objective lens having a numerical aperture greater than 0.6, notably a numerical aperture of the order of 0.85 as used for next-generation optical recording media. In other words, the recording of data can be performed using the same optical systems as used for next-generation optical recording media.

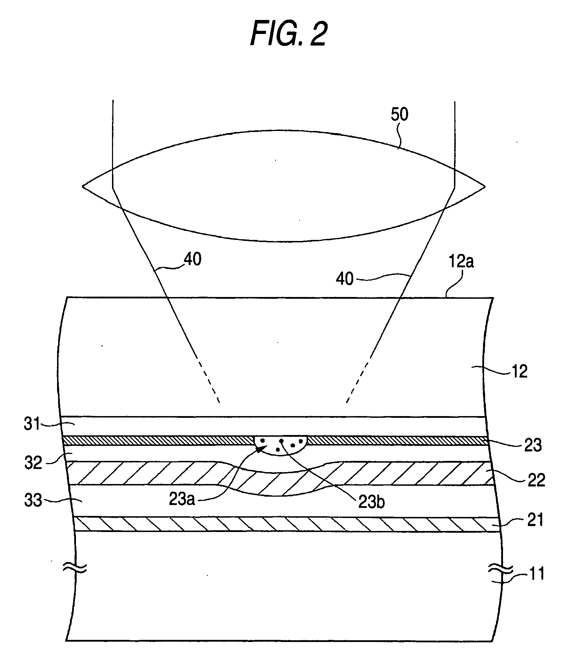

Fig. 2 is a cross-sectional sketch illustrating schematically a situation that occurs when the optical recording medium 10 is irradiated with a laser beam 40. Incidentally, the cross section of the optical recording medium 10 shown in Fig. 2 is a cross section along the groove 11a or the land 11b.

As shown in Fig. 2, the noble-metal oxide layer 23 is decomposed in the central part of a beam spot to form bubble pit 23a filled with oxygen gas ($O_2$) when the laser beam 40 with the wavelength as defined above is focused with the objective lens 50 having the numerical aperture as defined above and applied to the optical recording medium 10. In the interior of the bubble pit 23a, fine particles 23b of the constituent are brought to a dispersed state. At this point, layers present around the bubble pit 23a undergo plastic deformation by the pressure from the bubble pit 23a. Accordingly, this bubble pit 23a can be used as an irreversible mark of recording. In the case of using, e.g., platinum oxide ($PtO_x$) as the material of the noble-metal oxide layer, the platinum oxide ($PtO_x$) decomposes into platinum (Pt) and oxygen gas ($O_2$) in the central part of a beam spot and brings about a state in which fine particles of platinum (Pt) are dispersed in the bubble pit 23a. The portion of the noble-metal oxide layer 23 in which any bubble pit 23a is not formed is a blank area.

The decomposition in the noble-metal oxide layer 23 does not occur throughout the beam spot, but takes place, as mentioned above, only in the central part of the beam spot. Accordingly, the bubble pit 23a (mark of recording) formed is smaller than the beam spot diameter, so that super-resolution recording can be achieved. The following are reasons why such a super-resolution recording can be performed.

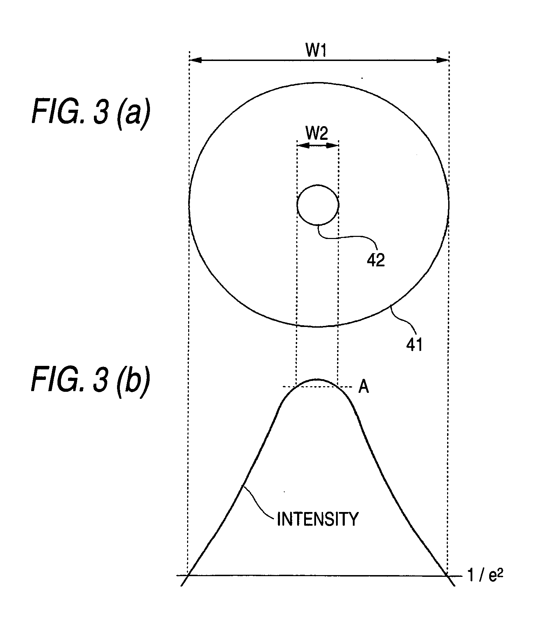

Fig. 3(a) is a plan view showing a beam spot of the laser beam 40 on the noble-metal oxide layer 23, and Fig. 3(b) is a curve showing the intensity distribution in the beam spot.

Although the beam spot 41 is nearly circular in planer shape as shown in Fig. 3(a), the intensity distribution of the laser beam 40 in the interior of the beam spot 41 is not uniform but describes a Gaussian curve as shown in Fig. 3 (b). In other words, higher energy is applied to an area the closer the area lies to the center of the beam spot 41. Therefore, the setting of a certain threshold value A far in excess of the maximum intensity $1/e^2$ can render the diameter W2 of the area 42, wherein the intensity becomes higher than the threshold value A, sufficiently smaller than the diameter W 1 of the beam spot 41. This situation means that, as far as the noble-metal oxide layer 23 has a property of decomposing upon the irradiation with a laser beam of intensity higher than the threshold value A, the bubble pit 23a (mark of recording) is selectively formed only in the part corresponding to the area 42 in the beam spot 41 of the area irradiated with the laser beam 40.

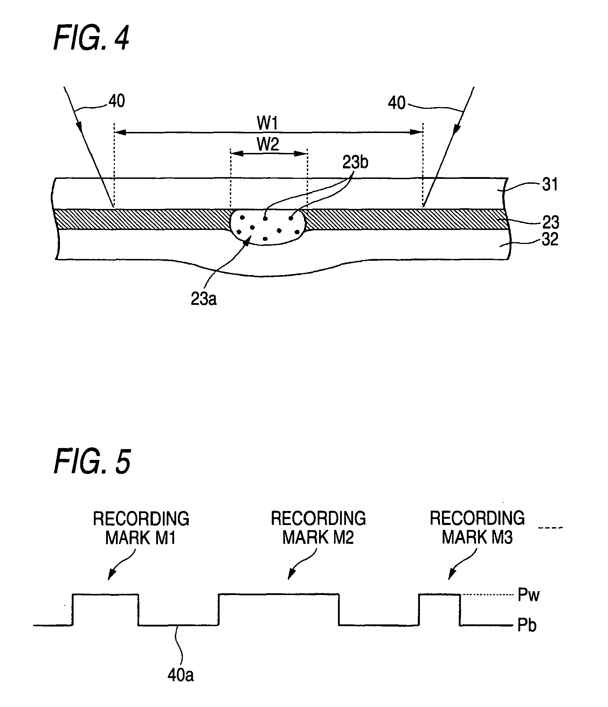

Thus, as shown in Fig. 4, the bubble pit 23 a (mark of recording) sufficiently smaller than the diameter W1 of the beam spot can be formed in the noble-metal oxide layer 23 and the diameter thereof becomes close to W2. Namely, the relationship between the apparent beam spot diameter W2 and the actual beam spot diameter W1 becomes W1>W2;

as a result, super-resolution recording is achieved. Herein, platinum oxide ($PtO_x$) as the most suitable material for the noble-metal oxide layer 23 has a property of decomposing upon heating to 580°C, so that the irradiation intensity capable of raising the temperature of the noble-metal oxide layer 23 up to 580°C or above becomes the threshold value A. Since the selection of a material fairly high in thermal conductivity as the material for the dielectric layer 32 is made in the invention, the area whose temperature is raised up to 580°C or above is not excessively widen; as a result, even minute marks of recording are allowed to have good shapes.

Accordingly, when the optical recording medium 10 is being rotated and irradiated with the intensity-modulated laser beam 40 along the groove 11a and/or the land 11b, it becomes possible to form marks of recording more minute than the resolution limit in the desired areas of the noble-metal oxide layer 23.

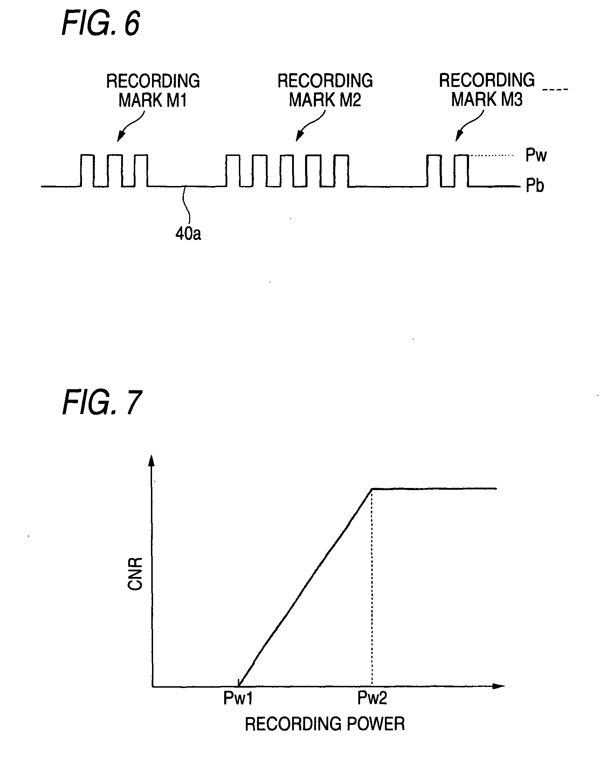

Fig. 5 is a drawing of the waveform showing an example of an intensity-modulation pattern of the laser beam 40 under recording. As shown in Fig. 5, it is recommended that the intensity 40a of the laser beam 40 under recording is set at a recording power (=Pw) on the areas where recording marks M1, M2, M3 and so forth have to be formed, while it is set at a base power (=Pb) on the areas where no recording marks should be formed (blank areas). Thus the formation of bubble pits 23a through decomposition in the noble-metal oxide layer 23 takes place only in the areas irradiated with the laser beam 40 having the recording power Pw, and thereby the formation of recording marks M1, M2, M3 and so forth having the desired lengths, respectively, becomes possible. Alternatively, without limited to the intensity-modulation pattern shown in Fig. 5, the intensity-modulation pattern of the laser beam 40 under recording may be formed of the recording marks M1, M2, M3 and so forth which are made with their respective trains of spaced pulses as shown in Fig. 6.

Fig. 7 is a graph showing schematically a relationship between a recording power of the laser beam 40 and a CNR of the reproduction signal produced by the subsequent reproduction.

As shown in Fig. 7, where the recording power of the laser beam 40 is lower than Pw1 in the recording on the optical recording medium 10, effective reproduction signals are not produced in the subsequent reproduction. As a reason for this situation, it is thought that the noble-metal oxide layer 23 undergoes substantially no decomposition when the recording power of the laser beam 40 is lower than Pw1. In addition, in the region where the recording power of the laser beam 40 is from Pw1 to under Pw2 (>Pw1), the higher the recording power, the higher CNR can be ensured in the subsequent reproduction. As a reason for this situation, it is thought that the decomposition in the noble-metal oxide layer 23 occurs partially in the region where the recording power of the laser beam 40 is from Pw1 to under Pw2; as a result, the higher the recording power, the greater the amount of decomposition. And, even when the recording power is increased any further in the region where the recording power of the laser beam 40 is Pw2 or above, the CNR attained in the subsequent reproduction remains about the same. As a reason for this situation, it is thought that the noble-metal oxide layer 23 undergoes almost thorough decomposition in the region where the recording power of the laser beam 40 is Pw2 or above. In view of the foregoing, it can be said that the appropriate recording power setting of the laser beam 40 is Pw2 or above.

The value of Pw2, though varies depending on the makeup of the optical recording medium 10 (components in each constituent layer, thickness of each constituent layer, and so on) and the recording conditions (the recording linear speed, the wavelength of the laser beam 40, and so on), is in the following range

$$5.0 \text{ mW} \le Pw2 \le 9.0 \text{ mW}$$

when the recording linear speed is of the order of 6.0 m/s, the wavelength of the laser beam 40 is of the order of 405 nm and the numerical aperture of the objective lens 50 is of the order of about 0.85; and $Pw1 \times 1.4 \le Pw2 \le Pw1 \times 2.0$ holds for the relationship between Pw2 and the Pw1.

In the practical settings of the recording power, it is preferable that the recording power is set at a value higher than Pw2 by at least 0.3 mW with consideration given to variations in condition for manufacturing the optical recording medium 10, power fluctuations of the laser beam 40 and so on. This is because a lot of real harm is not caused even when the practical recording power is too high as compared with Pw2, and an adequate margin has to be provided for Pw2. However, the recording power higher than required is a waste of energy, so there is no necessity to set the recording power at a value higher than Pw2 by 2.0 mW or above. Accordingly, it is said that the practical recording power setting may range from 5.3 mW (=5.0 mW + 0.3 mW) to 11.0 mW (=9.0 mW + 2.0 mW).

The foregoing are the method and principle of recording data on the optical recording medium 10.

For reproduction of the data thus recorded, it is recommended that the optical recording medium 10 is irradiated with the laser beam 40 of intensity fixed at a predetermined value (reproducing power=Pr) along the groove 11 a and/or the land 11b as it is rotated. And the light reflected from the recording medium 10 in the foregoing condition undergoes photoelectric conversion, and thereby it becomes possible to obtain electric signals responsive to a string of marks of recording. Although reasons for the possibility of super-resolution reproduction are not necessarily clear, it can be presumed that some interaction occurs between the laser beam 40 and metal particulates 23 b present in bubble pits 23 a upon irradiation with the laser beam 40 set at the reproducing power and thereby super-resolution reproduction becomes possible.

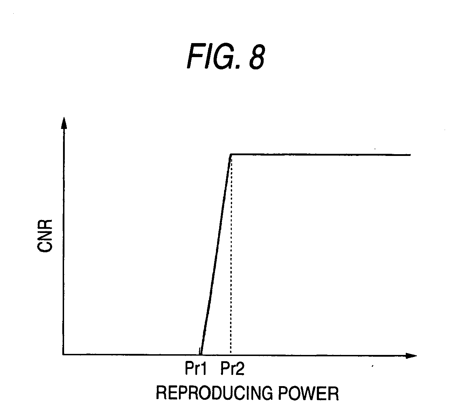

Fig. 8 is a graph showing schematically a relationship between a reproducing power of the laser beam 40 and CNR.

As shown in Fig. 8, effective reproduction signals are hardly produced when the reproducing power of the laser beam 40 is lower than Pr1, but CNR is quickly heightened when the reproducing power is set at a value of Pr1 or above and becomes saturated when the reproducing power is increased up to Pr2 (>Pr1). Although a reason for causing such phenomena is not necessarily clear, it can be presumed that interaction between metal particulates 23b and the light takes place or becomes pronounced by irradiation with the laser beam 40 set at Pr1 or above. Therefore, it is required that the reproducing power of the laser beam 40 be set at Pr1 or above, and the reproducing power setting of Pr2 or above is preferable.

However, when the reproducing power setting is too high, there is a fear that the noble-metal oxide layer 23 causes decomposition in blank areas, and the occurrence of such a decomposition results in substantial reproduction deterioration, or disappearance of data in some cases. In view of this point, it is preferable that the reproducing power of the laser beam 40 is set at Pr2 or above and under Pw1.

The value of Pr2, though varies depending on the makeup of the optical recording medium 10 (components in each constituent layer, thickness of each constituent layer, and so on) and the reproducing conditions (the reproduction linear speed, the wavelength of the laser beam 40, and so on), is in the following range

$$1.0 \text{ mW} \leq \text{Pr2} \leq 3.0 \text{ mW}$$

when the reproduction linear speed is of the order of 6.0 m/s, the wavelength of the laser beam 40 is of the order of 405 nm and the numerical aperture of the objective lens 50 is of the order of about 0.85; and

$$\text{Pr1} \times 1.05 \leq \text{Pr2} \leq \text{Pr1} \times 1.6$$

holds for the relationship between Pr2 and the Pr1.

It is preferable that the practical reproducing power setting is adjusted to a value from 0.1 to 0.3 mW higher than Pr2. This is because, in the reproducing power setting greater than Pr2, any further increase in reproducing power not only yields no improvement in CNR but also tends to cause deterioration from reproduction, so that the practical reproducing power has to be set at a level a little higher than Pr2 in order to control deterioration from reproduction. In general, power fluctuations of the laser beam 40 are below 0.1 mW in the 1- to 3-mW range of output, so that the setting at a level from 0.1 to 0.3 mW higher than Pr2 is thought to be adequate even with consideration of variations in conditions for manufacturing the optical recording medium 10, and so on. Thus it can be said that the practical reproducing power setting from 1.1 mW (=1.0 mW + 0.1 mW) to 3.3 mW (=3.0 mW + 0.3 mW) is recommendable.

Considering that the reproducing power on optical recording media currently in use is generally of the order of 0.1 mW to 0.5 mW and there is almost no cases where the reproducing power is set at about 0.8 mW or above even on next-generation optical recording media provided with two recording layers per side, it is apparent that the reproducing power level in the mode carrying out the invention is significantly high, compared with those on hitherto known optical recording media.

Further, as to the relationship between the practical reproducing power and the practical recording power, it can be said that the setting of

$$\text{Pw} \times 0.1 \leq \text{Pr} \leq \text{Pw} \times 0.5$$

is preferable, and the setting of

$$\text{Pw} \times 0.1 \leq \text{Pr} \leq \text{Pw} \times 0.4$$

is preferable by far. It is also apparent from such relationship that the reproducing power level in the mode carrying out the invention is significantly high, compared with those on hitherto known optical recording media.

With respect to the values to be set as the practical recording power and the practical reproducing power, it is preferable that they are stored as "setting information" in the optical recording medium 10 concerned. At the occasion of practical recording and reproduction of data by users, storage of such setting information in the optical recording medium 10 enables the users to read the setting information by means of an optical record reproduction apparatus and determine the recording power and the reproducing power on the basis of the information read.

It is far preferred that the setting information includes not only information about the recording power and the reproducing power but also information required for specifying various conditions (such as a linear speed) necessary to perform recording and reproduction of data on the optical recording medium 10. The setting information may be information recorded as wobbles or pre-pits, or information recorded as data in the noble-metal oxide layer 23. Further, the setting information may be not only information indicating directly various conditions necessary to record and reproduction data but also information indicating indirectly the recording power, the reproducing power and so on by specifying some of various conditions previously stored in an optical recording-and-reproducing apparatus.

In accordance with the above-mentioned mode of carrying out the invention, super-resolution recording and super-resolution reproduction can be carried out at a $\lambda$/NA setting of 640 nm or below by use of a laser beam with a wavelength ($\lambda$) shorter than about 635 nm and an objective lens with a numerical aperture greater than about 0.6, and it becomes possible to obtain excellent characteristics, notably in the super-resolution recording and the super-resolution reproduction using a laser beam with a wavelength of about 405 nm and an objective lens with a numerical aperture of about 0.85 which are used for next-generation optical recording media. Therefore, the same recording-and-reproducing apparatus as used for next-generation optical recording media can be utilized, so it becomes possible to reduce the costs for development and production of recording-and-reproducing apparatus. Moreover, ZnS or a mixture of ZnS and $SiO_2$ is used as the main component of the material for the dielectric layer 32, and besides, the proportion of ZnS to the sum of ZnS and $SiO_2$ is set at a value ranging from 60 mole % to 100 mole %, so that marks of recording are easy to form and thereby it becomes possible to obtain excellent signal characteristics even when minute recording marks are formed.

And when the phase-changing material represented by

$$(Sb_aTe_{1-a})_{1-b}MA_b$$

in particular is used as the main component of the material for the light absorption layer 22, marks of recording are more easily formed, and this effect coupled with the property of the dielectric layer 32 makes it possible to obtain more excellent signal characteristics.

The invention is not limited to the aforementioned mode of implementation, but various modifications can be made within the scope of the invention as hereinafter described in Claims. And it goes without saying that such modified modes are also incorporated in the scope of the invention.

For instance, the structure of the optical recording medium 10 shown in Fig. 1 is strictly a preferred structure of an optical recording medium according to the invention, and this structure should not be construed as limiting the structure of an optical recording medium according to the invention. Specifically, there's nothing wrong with providing an additional noble-metal oxide layer on the supporting substrate 11 side when viewed from the light absorption layer 22, or an additional light absorption layer on the light-transmitting layer 12 side when viewed from the noble-metal oxide layer 23.

Further, an optical recording material according to the invention can be structured to have recording surfaces on both sides by providing various functional layers, such as the light absorption layer 22 and the noble-metal oxide layer 23, on either side of the supporting substrate 11, or it can be structured to have two or more recording surfaces on one side by laminating two or more sets of various functional layers via transparent interlayers on one side of the supporting substrate 11. In addition, although the optical recording medium 10 shown in Fig. 1 has good compatibility with the so-called next-generation optical recording media, it can also be structured to have good compatibility with the so-called DVD- or CD-type optical recording media.

Furthermore, although the noble-metal oxide layer 23 is used as the recording layer having the function of a generation source of the bubble pit 23 a in the aforementioned mode of implementation, there's no wrong with using a noble-metal nitride layer in place of the noble-metal oxide layer. In this case also, at least any one of platinum (Pt), silver (Ag) and palladium (Pd), especially platinum (Pt), is preferred as the noble-metal species. In other words, it is preferred to select platinum nitride ($PtN_x$) in particular. When the noble-metal nitride layer is used, the gas bubble 23 is formed of nitrogen gas ($N_2$) evolved by decomposition, and the nitrogen gas ($N_2$) has very low possibilities for oxidizing or rotting other layers because of its very high chemical stability; as a result, it becomes possible to obtain high storage reliability.

Moreover, although the noble-metal oxide layer 23 is sandwiched between the dielectric layers 31 and 32 in the aforementioned mode of implementation, the dielectric layer 31 can be omitted as far as too large deformation of the mark areas formed by decomposition in the noble-metal oxide layer 23 can be suppressed.

[Examples]

Examples of the invention are illustrated below, but no limits should be imposed on the invention by these examples.

[Preparation of Samples]

Example 1

An optical recording medium sample having the same structure as the optical recording medium 10 shown in Fig. 1 was prepared in the following manner.

In the first place, a disk-shaped supporting substrate 11 made from polycarbonate, measuring about 1.1 mm in thickness and about 120 mm in diameter, and having a groove 11 a and a land 11b formed on the surface was prepared in accordance with an injection molding method.

In the second place, this supporting substrate 11 was set in a sputtering apparatus and, on the groove 11a- and land 11b-formed side of the substrate, an about 20 nm-thick reflective layer 21 constituted substantially of platinum (Pt), an about 100 nm-thick dielectric layer 33 constituted substantially of a mixture of ZnS and $SiO_2$ (molar ratio = about 80:20), an about 20 nm-thick light absorption layer 22 constituted substantially of a material represented by $Sb_{74.1}Te_{25.9}$ (wherein the numerical subscripts are expressed in mole %, and the same goes hereinafter exclusive of the cases where the atomic ratio is expressed in the simplest integral ratio), an about 60 nm-thick dielectric layer 32 constituted substantially of a mixture of ZnS and $SiO_2$ (molar ratio = about 80:20), an about 4 nm-thick noble-metal oxide layer 23 constituted substantially of platinum oxide ($PtO_x$), and an about 70 nm-thick dielectric layer 31 constituted substantially of a mixture of ZnS and $SiO_2$ (molar ratio = about 80:20) were formed successively in accordance with a sputtering method.

Herein, the noble-metal oxide layer 23 was formed using platinum (Pt) as a target and a mixture of oxygen gas ($O_2$) and argon gas (Ar) (flow-rate ratio = 1:3) as sputter gas, and setting the pressure in a chamber at 0.14Pa and the sputtering power at 100W. By these settings, the platinum oxide formed ($PtO_x$) came to have an extinction coefficient (k) of about 1.69.

Then, a UV-curable resin of acrylic type was coated on the dielectric layer 31 by use of a spin coating method, and irradiated with ultraviolet rays, thereby forming an about 100 $\mu$m-thick light-transmitting layer 12. Thus, an optical recording medium sample according to Example 1 was completed.

Example 2

An optical recording medium sample according to Example 2 was prepared in the same manner as the optical recording medium sample according to Example 1, except that ZnS alone was used in a substantial sense as the material for the dielectric layer 32.

Comparative Example 1

An optical recording medium sample according to Comparative Example 1 was prepared in the same manner as the optical recording medium sample according to Example 1, except that a ZnS-$SiO_2$ mixture (molar ratio= about 50:50) was used in a substantial sense as the material for the dielectric layer 32 and the thickness of the dielectric layer 31 was set at about 85 nm. The thickness of the dielectric layer 31 was set to differ from that in Example 1 so that almost the same reflectivity as the optical recording medium of Example 1 was given to the optical recording medium prepared herein. The reason for setting a different thickness for the dielectric layer 31 in each of Examples and Comparative Examples described hereinafter is the attainment of reflectivity almost equal to that of the optical recording medium of Example 1.

Comparative Example 2

An optical recording medium sample according to Comparative Example 2 was prepared in the same manner as the optical recording medium sample according to Example 1, except that a ZnS-$SiO_2$ mixture (molar ratio= about 30:70) was used in a substantial sense as the material for the dielectric layer 32 and the thickness of the dielectric layer 31 was set at about 95 nm.

Comparative Example 3

An optical recording medium sample according to Comparative Example 3 was prepared in the same manner as the optical recording medium sample according to Example 1, except that $SiO_2$ alone was used in a substantial sense as the material for the dielectric layer 32.

Example 3

An optical recording medium sample according to Example 3 was prepared in the same manner as the optical recording medium sample according to Example 1, except that the thickness of the dielectric layer 32 was set at about 80 nm and the thickness of the dielectric layer 31 was set at about 50 nm.

Comparative Example 4

An optical recording medium sample according to Comparative Example 4 was prepared in the same manner as the optical recording medium sample according to Example 3, except that a $ZnS$-$SiO_2$ mixture (molar ratio= about 50:50) was used in a substantial sense as the material for the dielectric layer 32 and the thickness of the dielectric layer 31 was set at about 70 nm.

Comparative Example 5

An optical recording medium sample according to Comparative Example 5 was prepared in the same manner as the optical recording medium sample according to Example 3, except that a $ZnS$-$SiO_2$ mixture (molar ratio= about 30:70) was used in a substantial sense as the material for the dielectric layer 32 and the thickness of the dielectric layer 31 was set at about 75 nm.

Example 4

An optical recording medium sample according to Example 4 was prepared in the same manner as the optical recording medium sample according to Example 1, except that the dielectric layer 32 was set to have a thickness of about 40 nm and $ZnS$ alone was used in a substantial sense as the material thereof, and besides, the dielectric layer 31 was set to have a thickness of about 90 nm.

Comparative Example 6

An optical recording medium sample according to Comparative Example 6 was prepared in the same manner as the optical recording medium sample according to Example 5, except that a $ZnS$-$SiO_2$ mixture (molar ratio= about 50:50) was used in a substantial sense as the material for the dielectric layer 32 and the thickness of the dielectric layer 31 was set at about 105 nm.

Comparative Example 7

An optical recording medium sample according to Comparative Example 7 was prepared in the same manner as the optical recording medium sample according to Example 5, except that a $ZnS$-$SiO_2$ mixture (molar ratio= about 30:70) was used in a substantial sense as the material for the dielectric layer 32 and the thickness of the dielectric layer 31 was set at about 110 nm.

Comparative Example 8

An optical recording medium sample according to Comparative Example 8 was prepared in the same manner as the optical recording medium sample according to Example 5, except that $SiO_2$ alone was used in a substantial sense as the material for the dielectric layer 32 and the thickness of the dielectric layer 31 was set at 110 nm.

The thickness and material of the dielectric layer 32, and the thickness of the dielectric layer 31 in each of the optical recording medium samples according to Examples 1 to 5 and Comparative Examples 1 to 8 are summarized in the following table.

[Table 1]

| | Thickness of Dielectric Layer 32 | Material for Dielectric Layer 32 ($ZnS$:$SiO_2$) | Thickness of Dielectric Layer 31 |
| --- | --- | --- | --- |
| Example 1 | 60nm | 80:20 | 70nm |

Table continued

|  | Thickness of Dielectric Layer 32 | Material for Dielectric Layer 32 ($ZnS:SiO_2$) | Thickness of Dielectric Layer 31 |
|---|---|---|---|
| Example 2 | 60nm | 100:0 | 70nm |
| Example 3 | 80nm | 80:20 | 50nm |
| Example 4 | 40nm | 100:0 | 90nm |
| Comparative Example 1 | 60nm | 50: 50 | 85nm |
| Comparative Example 2 | 60nm | 30: 70 | 95 nm |
| Comparative Example 3 | 60nm | 0:100 | 100nm |
| Comparative Example 4 | 80nm | 50:50 | 70nm |
| Comparative Example 5 | 80nm | 30:70 | 75nm |
| Comparative Example 6 | 40nm | 50:50 | 105nm |
| Comparative Example 7 | 40nm | 30:70 | 110nm |
| Comparative Example 8 | 40nm | 0:100 | 110nm |

[Characteristic Evaluation 1]

In the first place, the optical recording medium samples of Examples 1 to 2 and Comparative Examples 1 to 3 were each set in an optical disc drive evaluation device (DDU1000, made by Pulstec Industrial Co., Ltd.), and a laser beam with a wavelength of about 405 nm was applied to their respective noble-metal oxide layers 23 via an objective lens with a numerical aperture of about 0.85 from their respective light-incidence planes 12a as they were each rotated at a linear speed of about 4.9 m/s, and thereby single frequency signals 75 nm in both recording mark length and blank length were recorded. Incidentally, the resolution limit given by $d_2 = \lambda/4NA$ is about 120 nm when the foregoing optical system is used. In addition, the thickness of the dielectric layer 32 was about 60 nm in each of the optical recording medium samples prepared in Examples 1 to 2 and Comparative Examples 1 to 3.

With respect to the power of laser beam 40 during the recording, the recording power (Pw) was set variously, and the base power (Pb) was set at approximately 0 mW. And the pattern shown in Fig. 5 was used as the pulse pattern of the laser beam 40.

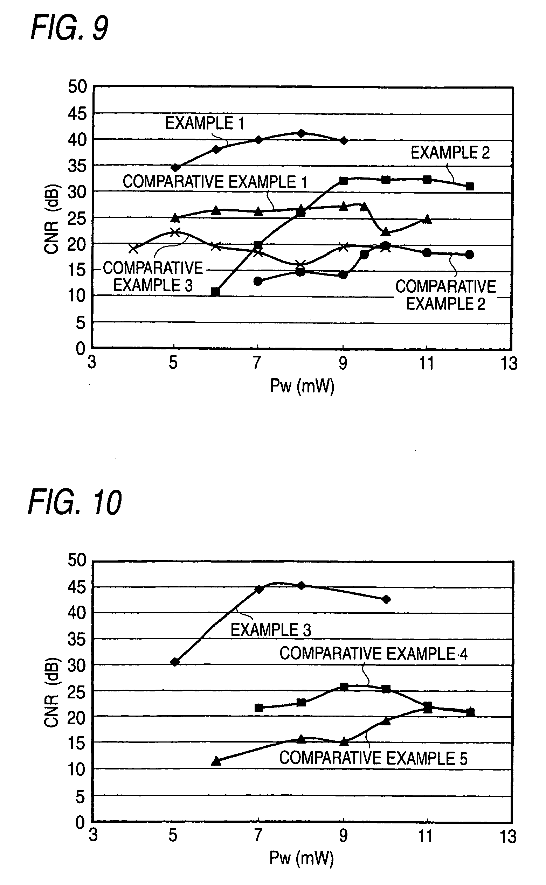

Then, the single frequency signals recorded were played back, and CNR values thereof were measured. The reproducing power (Pr) of the laser beam 40 was set at 2.6 mW, 2.6 mW, 2,2 mW, 2.2 mW and 2.0 mW for the optical recording media of Example 1, Example 2, Comparative Example 1, Comparative Example 2 and Comparative Example 3, respectively. Results of the CNR measurements are shown in Fig. 9.

As shown in Fig. 9, the optical recording medium sample of Example 1 wherein the material for the dielectric layer 32 was a $ZnS-SiO_2$ mixture (molar ratio= about 80:20) in a substantial sense and the optical recording medium sample of Example 2 wherein the material for the dielectric layer 32 was ZnS alone in a substantial sense delivered high CNR of 30 dB or above, particularly CNR of 40 dB or above in the case of the optical recording medium sample of Example 1, by appropriately setting the recording power (Pw). On the other hand, it was impossible to obtain CNR higher than 30 dB by use of the optical recording samples of Comparative Examples 1 to 3 no matter what recording power (Pw) was set.

[Characteristic Evaluation 2]

In the second place, the optical recording medium samples of Example 3, Comparative Example 4 and Comparative Example 5 were each set in the aforementioned optical disc drive evaluation device, and thereon the single frequency signals 75 nm in both recording mark length and blank length were recorded under the same conditions as adopted in [Characteristic Evaluation 1]. In each of the optical recording medium samples prepared in Example 3, Comparative Example 4 and Comparative Example 5, the thickness of the dielectric layer 32 was about 80 nm.

With respect to the power of laser beam 40 during the recording, the recording power (Pw) was set variously, and the base power (Pb) was set at approximately 0 mW And the pattern shown in Fig. 5 was used as the pulse pattern of the laser beam 40.

Then, the single frequency signals recorded were played back, and CNR values thereof were measured. The reproducing power (Pr) of the laser beam 40 was set at 3.0 mW, 2.8 mW and 2.4 mW for the optical recording media of Example 3, Comparative Example 4 and Comparative Example 5, respectively. Results of the CNR measurements are shown in Fig. 10.

As shown in Fig. 10, the optical recording medium sample of Example 3 wherein the material for the dielectric layer 32 was a ZnS-SiO$_2$ mixture (molar ratio= about 80:20) in a substantial sense delivered high CNR of 45 dB or above by appropriately setting the recording power (Pw). On the other hand, it was impossible to obtain CNR higher than 30 dB by use of the optical recording samples of Comparative Examples 4 and 5 no matter what recording power (Pw) was set.

[Characteristic Evaluation 3]

In the third place, the optical recording medium samples of Example 4, Comparative Example 6, Comparative Example 7 and Comparative Example 8 were each set in the aforementioned optical disc drive evaluation device, and thereon the single frequency signals 75 nm in both recording mark length and blank length were recorded under the same conditions as adopted in [Characteristic Evaluation 1]. In each of the optical recording medium samples prepared in Example 4, Comparative Example 6, Comparative Example 7 and Comparative Example 8, the thickness of the dielectric layer 32 was about 40 nm.

With respect to the power of laser beam 40 during the recording, the recording power (Pw) was set variously, and the base power (Pb) was set at approximately 0 mW And the pattern shown in Fig. 5 was used as the pulse pattern of the laser beam 40.

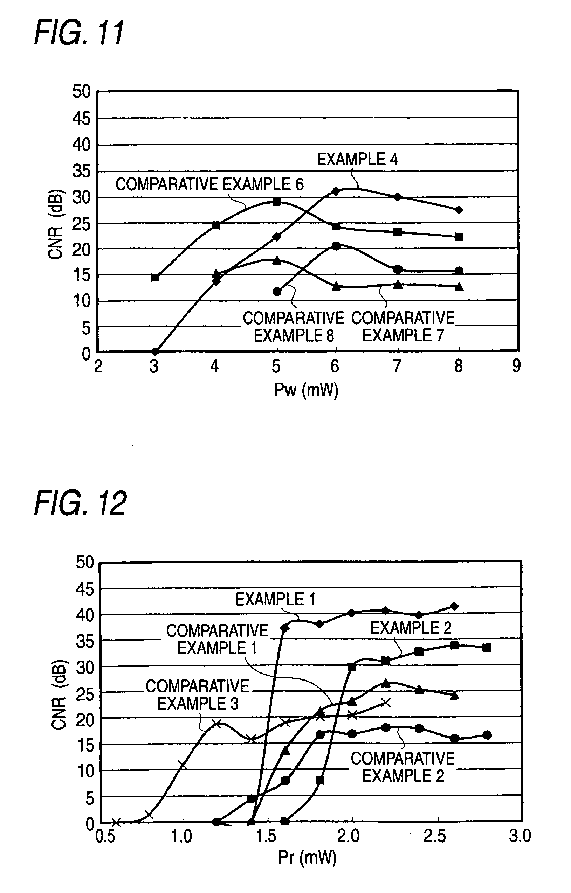

Then, the single frequency signals recorded were played back, and CNR values thereof were measured. The reproducing power (Pr) of the laser beam 40 was set at 2.0 mW, 2.0 mW, 2.0 mW and 2.4 mW for the optical recording media of Example 4, Comparative Example 6, Comparative Example 7 and Comparative Example 8, respectively. Results of the CNR measurements are shown in Fig. 11.

As shown in Fig. 11, the optical recording medium sample of Example 5 wherein the material for the dielectric layer 32 was ZnS alone in a substantial sense delivered high CNR of 30 dB or above by appropriately setting the recording power (Pw). On the other hand, it was impossible to obtain CNR higher than 30 dB by use of the optical recording samples of Comparative Examples 6 and 8 no matter what recording power (Pw) was set.

[Characteristic Evaluation 4]

In the fourth place, of the single frequency signals recorded in [Characteristic Evaluation 1], the single frequency signals recorded on the optical recording medium samples of Example 1, Example 2, Comparative Example 1, Comparative Example 2 and Comparative Example 3 at the Pw settings of 8.0 mW, 10.0 mW, 10.0 mW, 10.0 mW and 6.0 mW, respectively, were played back with various amounts of reproducing power, and CNR values thereof were measured. Results of the measurements are shown in Fig. 12.

As can be seen from Fig. 12, the optical recording medium samples of Example 1 and Example 2 delivered high CNR of 30 dB or above, particularly CNR of 40 dB or above in the case of the optical recording medium sample of Example 1, by appropriately setting the reproducing power (Pr). On the other hand, it was impossible to obtain CNR of 30 dB or above by use of the optical recording medium samples of Comparative Examples 1 to 3 no matter what reproducing power (Pr) was set.

[Characteristic Evaluation 5]

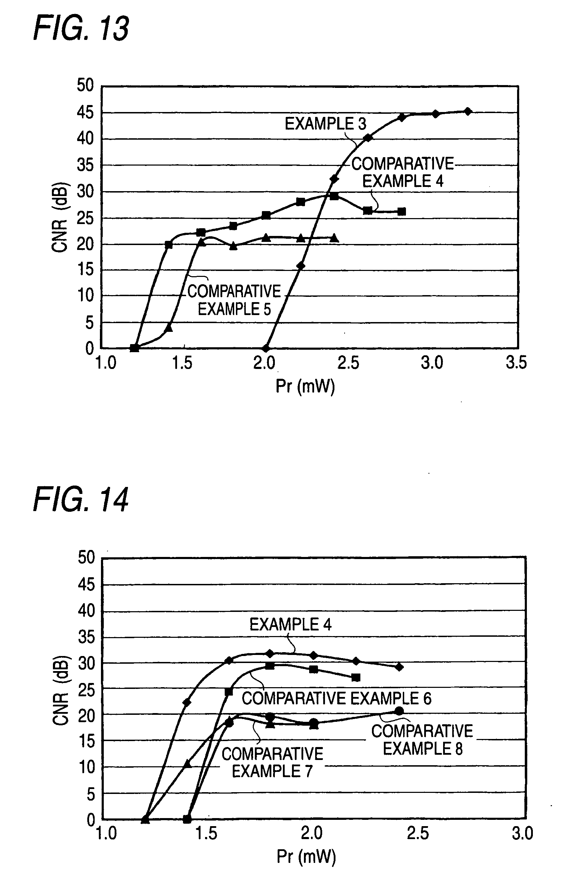

In the fifth place, of the single frequency signals recorded in [Characteristic Evaluation 2], the single frequency signals recorded on the optical recording medium samples of Example 3, Comparative Example 4 and Comparative Example 5 at the Pw settings of 8.0 mW, 9.0 mW and 11.0 mW, respectively, were played back with various amounts of reproducing power, and CNR values thereof were measured. Results of the measurements are shown in Fig. 13.

As can be seen from Fig. 13, the optical recording medium sample of Example 3 delivered high CNR of 45 dB or above by appropriately setting the reproducing power (Pr), but it was impossible to obtain CNR of 30 dB or above by use of the optical recording medium samples of Comparative Examples 4 and 5 no matter what reproducing power (Pr) was set.

[Characteristic Evaluation 6]

In the sixth place, of the single frequency signals recorded in [Characteristic Evaluation 3], the single frequency signals recorded on the optical recording medium samples of Example 4, Comparative Example 6, Comparative Example 7 and Comparative Example 8 at the Pw settings of 6.0 mW, 5.0 mW, 5.0 mW and 6.0 mW, respectively, were played back with various amounts of reproducing power, and CNR values thereof were measured. Results of the measurements are shown in Fig. 14.

As can be seen from Fig. 14, the optical recording medium sample of Example 4 delivered high CNR of 30 dB or above by appropriately setting the reproducing power (Pr), but it was impossible to obtain CNR of 30 dB or above by use of the optical recording medium samples of Comparative Examples 6 to 8 no matter what reproducing power (Pr) was set.

[Characteristic Evaluation 7]

In the seventh place, the optical recording medium samples of Example 1, Example 2, Comparative Example 1, Comparative Example 2 and Comparative Example 3 were each set in the aforementioned optical disc drive evaluation device, and thereon the single frequency signals made up of specified recording mark lengths and blank lengths were recorded under the same conditions as adopted in [Characteristic Evaluation 1]. The recording mark length and blank length were set variously within the range of 37.5 nm to 300 nm.

And these single frequency signals were played back and CNR values thereof were measured. The recording power under recording and reproducing power under reproduction on each optical recording medium sample were set at the values shown in Table 2, respectively.

[Table 2]

|  | Pw | Pr |
| --- | --- | --- |
| Example 1 | 8.0W | 2.6mW |
| Example 2 | 10.0mW | 2.6mW |
| Comparative Example 1 | 9.0mW | 2.2mW |
| Comparative Example 2 | 10.0mW | 2.2mW |
| Comparative Example 3 | 6.0mW | 1.8mW |

Results of CNR measurements are shown in Fig. 12

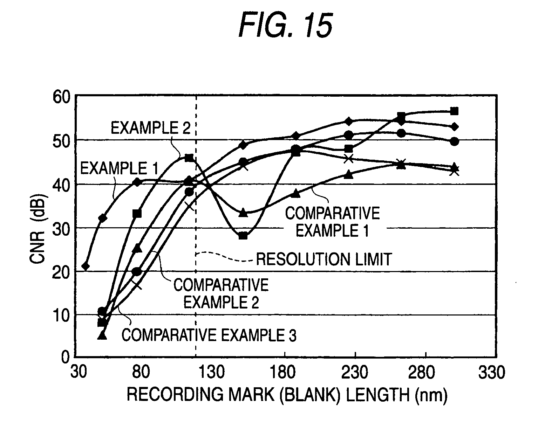

As shown in Fig. 15, no significant differences were observed among the optical recording medium samples when the recording mark length and blank length were over the resolution limit (about 120 nm), but the optical recording medium samples of Examples 1 and 2 showed a tendency to deliver higher CNR than the optical recording medium samples of Comparative Examples 1 to 3 when the recording mark length and blank length were under the resolution limit (about 120 nm). This tendency is thought to be due to strong influence of differences in the materials constituting the dielectric layers denoted as 32 upon the formation of finer recording marks.

<Industrial Applicability>

In accordance with the invention, the second dielectric layer adjacent to the noble-metal oxide layer functioning as a recording layer has an excellent balance of thermal conductivity with layer hardness, so it becomes possible to form fine recording marks in their true shapes. Accordingly, even when recording is carried out by formation of recording marks finer than the resolution limit, it becomes possible to obtain excellent characteristics. There's nothing wrong with using a noble-metal nitrite layer in place of the noble-metal oxide layer as the layer functioning as a recording layer.

The optical recording media according to the invention in particular enable super-resolution recording and super-resolution reproduction at a $\lambda$/NA setting below 640 nm by use of a laser beam with a wavelength shorter than 635 nm and an objective lens with a numerical aperture in excess of about 0.6, and make it possible to obtain excellent characteristics, notably in the super-resolution recording and super-resolution reproduction using a laser beam with a wavelength of about 405 nm and an objective lens with a numerical aperture of about 0.85 as used for next-generation optical recording media. Therefore, the same recording-and-reproducing apparatus as used for next-generation optical recording media can be utilized, so the costs for development and production of recording-and-reproducing apparatus can be reduced.

**Claims**

**1.** An optical recording medium comprising:

a substrate,
a noble-metal oxide layer provided on the substrate,
a first dielectric layer provided on a light-incidence plane side when viewed from the noble-metal oxide layer and a second dielectric layer provided on the side opposite to the light-incidence plane when viewed from the noble-metal oxide player,

the second dielectric layer containing ZnS or a mixture of ZnS and $SiO_2$ as a main component, wherein the proportion of ZnS to the sum of ZnS and $SiO_2$ is set at a value from 60 mole % to 100 mole %.

2.  An optical recording medium as described in claim 1, further comprising, on the side opposite to the light-incidence plane when viewed from the second dielectric layer, a light absorption layer and a third dielectric layer arranged in this order when viewed from the second dielectric layer.

3.  An optical recording medium as described in claim 2, further comprising a reflective layer provided between the substrate and the third dielectric layer.

4.  An optical recording medium as described in any of claims 1 to 3, wherein the noble-metal oxide layer contains platinum oxide ($PtO_x$)

5.  An optical recording medium as described in any of claims 2 to 4, wherein the light absorption layer contains as a main component a material which can be represented by

$$(Sb_aTe_{1-a})_{1-b}MA_b$$

(wherein MA is an element other than antimony (Sb) and tellurium (Te), $0<a<1$ and $0\leq b<1$), and besides which is different from an intermetallic compound represented by

$$\{(GeTe)_c(Sb_2Te_3)_{1-c}\}_dMB_{1-d}$$

(wherein MB is an element other than antimony (Sb), tellurium (Te) and germanium (Ge), c is 1/3, 1/2 or 2/3, and $0<d\leq1$).

6.  An optical recording medium as described in any of claims 1 to 5, wherein a light-transmitting layer having the light-incidence plane is further provided on the side opposite to the substrate side when viewed from the first dielectric layer, the substrate is from 0.6 mm to 2.0 mm in thickness and the light-transmitting layer is from 10 $\mu$m to 200 $\mu$m in thickness.

7.  A manufacturing method of an optical recording medium, comprising:

    a first process of forming on a substrate a reflective layer, a third dielectric layer, a light absorption layer, a second dielectric layer, a noble-metal oxide layer and a first dielectric layer in the order of mention, and
    a second process of forming a light-transmitting layer on the first dielectric layer,
    and by incorporating ZnS or a mixture of ZnS and $SiO_2$ as a main component in the second dielectric layer, wherein the proportion of ZnS to the sum of ZnS and $SiO_2$ is set at a value from 60 mole % to 100 mole %.

8.  A manufacturing method of an optical recording medium as described in claim 7, wherein the first process is carried out according to a vapor deposition method and the second process is carried out according to a spin coating method.

9.  A data recording method in which data is recorded on an optical recording medium as described in any of claims 1 to 6 by irradiation with a laser beam from the light-transmitting layer side,
    wherein, when the wavelength of the laser beam is represented as $\lambda$ and the numerical aperture of an objective lens for focusing the laser beam is represented as NA, $\lambda$/NA is set at 640 nm or below and a string of recording marks including recording marks $\lambda$/4NA or below in length is recorded.

10. A data reproducing method in which data is played back on an optical recording medium as described in any of claims 1 to 6 by irradiation with a laser beam from the light-transmitting layer side,
    wherein, when the wavelength of the laser beam is represented as $\lambda$ and the numerical aperture of an objective lens for focusing the laser beam is represented as NA, $\lambda$/NA is set at 640 nm or below and the data is played back from a string of marks of recording including marks of recording $\lambda$/4NA or below in length.

## FIG. 1 (a)

## FIG. 1 (b)

# FIG. 2

*FIG. 3 (a)*

W1

W2

42

41

*FIG. 3 (b)*

A

INTENSITY

1 / e²

## FIG. 4

## FIG. 5

## FIG. 6

RECORDING       RECORDING       RECORDING ----
MARK M1          MARK M2          MARK M3

Pw

Pb

40a

## FIG. 7

CNR

Pw1        Pw2

RECORDING POWER

# FIG. 8

## FIG. 9

## FIG. 10

## FIG. 11

## FIG. 12

## FIG. 13

## FIG. 14

## FIG. 15

**INTERNATIONAL SEARCH REPORT**

| International application No. |
|---|
| PCT/JP2004/011856 |

| A. CLASSIFICATION OF SUBJECT MATTER |
|---|
| Int.Cl⁷ G11B7/24, 7/26, 7/00, B41M5/26 |

According to International Patent Classification (IPC) or to both national classification and IPC

| B. FIELDS SEARCHED |
|---|
| Minimum documentation searched (classification system followed by classification symbols)<br>Int.Cl⁷ G11B7/24, 7/26, 7/00, B41M5/26 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| P | JP 2004-220687 A (Samsung Japan corp.),<br>05 August, 2004 (05.08.04),<br>Full text; all drawings<br>(Family: none) | 1-10 |
| P | JP 2004-39177 A (National Institute of Advanced Industrial Science and Technology),<br>05 February, 2004 (05.02.04),<br>Full text; all drawings<br>(Family: none) | 1-10 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 September, 2004 (08.09.04) | Date of mailing of the international search report<br>28 September, 2004 (28.09.04) |
|---|---|
| Name and mailing address of the ISA/<br>Japanese Patent Office | Authorized officer |
| Facsimile No. | Telephone No. |

Form PCT/ISA/210 (second sheet) (January 2004)